Europäisches Patentamt

European Patent Office

Office européen des brevets

(19)

(11) **EP 0 716 741 B1**

(12) **EUROPEAN PATENT SPECIFICATION**

(45) Date of publication and mention
of the grant of the patent:
**10.12.1997 Bulletin 1997/50**

(21) Application number: **94927562.2**

(22) Date of filing: **01.09.1994**

(51) Int Cl.$^6$: **G01N 21/85**, G01N 21/35

(86) International application number:
**PCT/EP94/02956**

(87) International publication number:
**WO 95/06873 (09.03.1995 Gazette 1995/11)**

(54) **A METHOD AND APPARATUS FOR DETERMINING THE CONCENTRATION OF A COMPONENT PRESENT IN A FLUID STREAM IN DISPERSED FORM**

METHODE UND VORRICHTUNG ZUR KONZENTRATIONSMESSUNG EINER IN EINER STRÖMENDEN FLÜSSIGKEIT IN FORM EINER DISPERSION ANWESENDEN KOMPONENTE

PROCEDE ET APPAREIL DE MESURE DE LA CONCENTRATION D'UN COMPOSANT DISPERSE DANS UN FLUIDE EN MOUVEMENT

(84) Designated Contracting States:
**BE DE DK FR GB NL SE**

(30) Priority: **03.09.1993 EP 93306972**

(43) Date of publication of application:
**19.06.1996 Bulletin 1996/25**

(73) Proprietor: **SHELL INTERNATIONALE RESEARCH MAATSCHAPPIJ B.V.**
**2596 HR Den Haag (NL)**

(72) Inventors:
• **BANNELL, John, Lesley, Kingsford**
**NL-2288 GD Rijswijk (NL)**
• **VAN DEELEN, Christiaan, Charles, Johannes**
**NL-2288 GD Rijswijk (NL)**
• **SCHWING, Alexander**
**NL-2288 GD Rijswijk (NL)**

(56) References cited:
**EP-A- 0 310 740          WO-A-85/04478**
**DE-A- 3 633 916          FR-A- 2 685 775**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates in general to a method and apparatus for determining the concentration of a first fluid which is finely divided in a second fluid. Generally, a system wherein a first fluid is finely divided in a second fluid is defined a dispersed system, i.e. the first fluid (dispersed phase) is wandering about the second fluid (dispersing medium) in a finely divided form.

As known to those skilled in the art, dispersed systems can be sub-divided as follows: dependent on the diameter of the dispersed phase particles, a dispersed system can be a solution (homogeneous mixture in which no settling occurs and in which solute particles are at the molecular or ionic state of subdivision); a colloidal system (an intermediate kind of mixture in which the solute-like particles are suspended in the solvent-like phase and in which the particles of the dispersed phase are small enough that settling is negligible and large enough to make the mixture appear cloudy); or a suspension (a clearly heterogeneous mixture in which solute-like particles immediately settle out after mixing with a solvent-like phase).

In particular, the present invention relates to a method and apparatus for determining the concentration of a contaminant in a fluid stream in dispersed form.

More in particular, the invention relates to detecting and measuring the concentration of dispersed hydrocarbon (oil) and/or particulate materials in a water stream.

The continuous on-line measurement of oil-in-water concentration is becoming increasingly important in order to meet future effluent quality standard.

A variety of instruments is known for measuring the oil present in water streams and is installed to monitor produced water discharges.

These known instruments have inherent problems when applied to mixed pollutant waste streams and cannot discriminate between the oil contamination of interest and the presence of other materials.

Concern over the impact of industrial activities on the environment, often heightened by public concern and legislative requirements, has led to a re-evaluation of the wastes and discharges which routinely occur.

Historically, produced water has been disposed of to the environment after treatment, either by release to surface waters or by re-injection into suitable aquifiers or the production formations themselves. Strict quality levels are imposed by statutory authorities and these vary from maximum dispersed oil concentrations of 5 mg/l for discharge to fresh water systems, to dispersed oil concentrations of 40 mg/l for water streams discharged to the open sea. Current trends will result in reduction of these levels within the foreseeable future. New limits of 30 mg/l have been proposed. This will call for the on-line measurement of the discharge streams, and closer/improved control of the water treatment facilities, if the new standards are to be met.

Statutory measurement methods differ significantly throughout the world. However, the principle methods are based on infra-red measuring techniques in the 3.2 to 3.5 μm wavelength range. This requires the sampling of the water discharge, laboratory extraction of the oil present in a water sample by a suitable solvent, and the subsequent measurement of the oil concentration. In known solvent based instruments for determining oil concentrations water is to be separated from the oil, e.g. by means of halogenated solvents, and subsequently an infra-red (3.5 μm) analysis is carried out.

These methods have been shown to be time-consuming and inaccurate in practice. Changes in international convention will prohibit the use of the solvents used. Numerous commercial on-line monitors are available, based on a variety of detection principles e.g. (visible) light scattering, I-.R.-absorption and the like. None have proved satisfactory for use in oil industry applications.

However, a method according to the preamble of Claim 1 is known from WO-A-85/04478.

It is an object of the invention to provide a method and apparatus for determining the concentration of a dispersed component e.g. a contaminant in a fluid stream, based upon short wavelength measurement enabling the accurate detection and measurement of (low) concentration of hydrocarbon and/or other contaminants present in a fluid stream, concurrently and independently.

The invention therefore provides a method for determining the concentration of a component present in a fluid stream in dispersed form and a corresponding apparatus as disclosed in claims 1 and 9.

Advantageously, the said predetermined range of wavelengths is in the near-infra-red range (1.0-2.5 μm).

The invention is based upon the application of a short wavelength, optical principle, based upon multiple wavelength measurement, comparison of differently treated samples of a test fluid, and statistical methods, which can detect and analyse small spectral differences between the samples caused by the presence of contaminants at different concentrations. The principle is based upon a combination of the scattering, and absorption properties which are related to refractive index and size distribution of the contaminants.

Further, the invention combines the principles of light scattering (sensitive to suspended components) and light absorption (sensitive to dissolved components).

Advantageously, visible light (0.4-1 μm) can be emitted simultaneously with the near infra-red radiation and at least one wavelength is selected in the said visible light range.

In particular, the invention is further based upon a differential measurement system to take two separate measurements under different sample conditions and allow comparison of the differences between them.

It is remarked that WO-A-85/04478 discloses an oil-in-water measurement wherein a reference sample is applied. However, this measurement is only based upon absorption in the 3.4 to 3.5 μm wavelength range and the specific technique of the present invention has neither been disclosed nor suggested.

Further, FR-A-2685775 discloses a method for providing the polycyclic aromatics content in a hydrocarbon mixture using near-infra-red spectro photometric analysis in the 0.8-2.6 μm wavelength range and DE-A-3633916 discloses a method for determining concentrations using absorption of light in the infra-red to ultraviolet range.

However, the specific technique of the invention based upon the combination of scattering and absorption has not been disclosed.

The invention will now be described in more detail by way of example by reference to the accompanying drawings, in which:

fig. 1 represents schematically the principle of a prior art oil-in-water measuring instrument;
fig. 2 represents schematically the principle of the present invention.

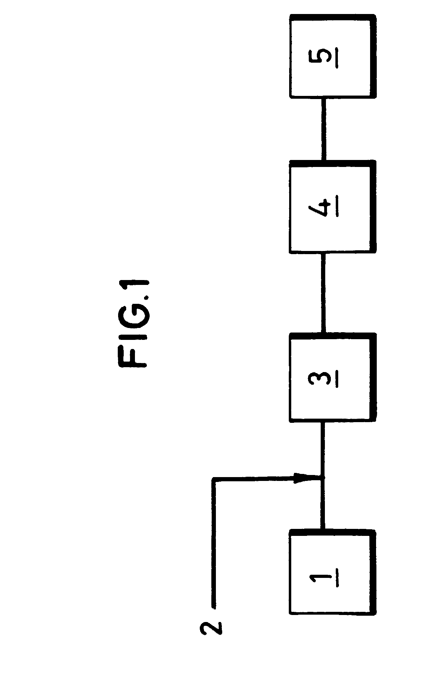

Referring to fig. 1 a block scheme of a prior art oil-in-water analyzer is shown.

Block 1 represents the oil-in-water sample to be analyzed.

Usually oils comprise hydrocarbons and are not water-soluble.

The hydrocarbons comprise CH-chains. Each of these chains has a different energy-absorption band in the 3.4-3.5 μm range of the infra-red absorption spectrum.

It will be appreciated by those skilled in the art that, when measuring the infra-red absorption of an oil sample between 3.4 and 3.5 μm, the absorption is related to the oil concentration in the sample. As water also absorbs energy in the infra-red band between 3.4 and 3.5 μm, it is virtually impossible to determine low oil concentrations in a water sample. For this purpose the oil present in the water should be separated prior to measurement.

Halogenated solvents supplied in any way suitable for the purpose via line 2 are suitable to separate oil from water for the subsequent infra-red analysis 3 as

a) these solvents are virtually insoluble in water;
b) they have a specific gravity higher than water;
c) they dissolve easily all volatile or non-volatile organic compounds; and
d) they do not absorb infra-red energy in the range of 2-4.5 μm.

After processing (block 4) of the infra-red analysis data 3, information (block 5) on the oil concentration is derived.

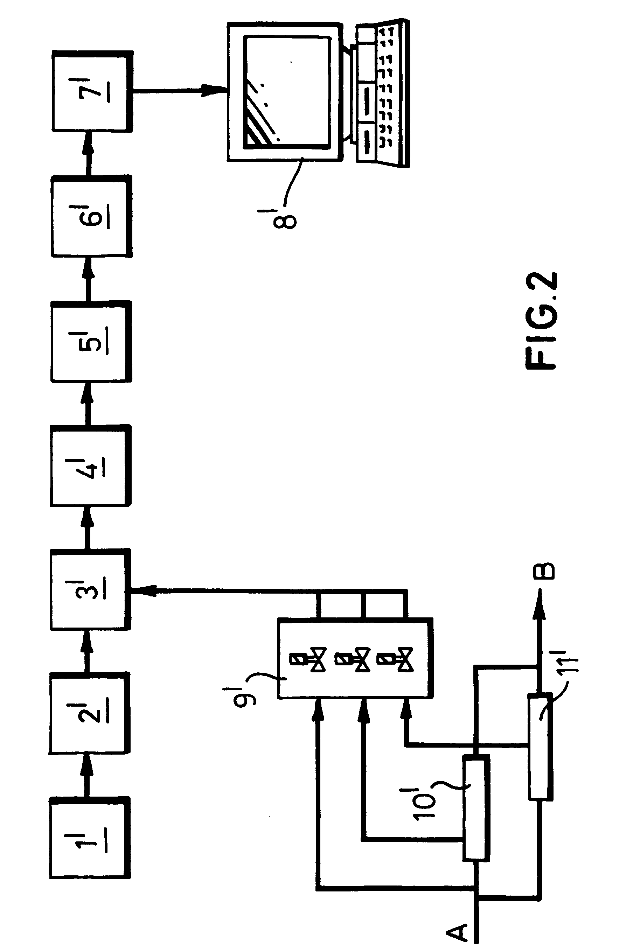

In fig. 2 the principle of the invention will be described in more detail. No solvent is applied and advantageously a predetermined number of wavelengths in the optical range, e.g. near-infra-red (1.0-2.5 μm) is used.

Light is emitted from any suitable light source 1' via any suitable optical system 2' to a sample or measurement cell 3'. Detection takes place via any suitable optical system 4' by any suitable detector 5' which is suitably connected e.g. via an amplifier 6' and A/D converter 7' to a computer 8' for data processing purposes. A set of measured light intensities is provided which are processed further in a data processing step which leads to the measurement of the concentration of contaminant in the fluid.

The sample or measurement cell 3' is connected in any suitable manner to a flow selection means 9'; reference numerals 10', 11' represent suitable filters. A and B represent an inlet for contaminated fluid and a drain respectively.

In the optical system 2' wavelength selection is suitably achieved by narrow band interference filters. These are e.g. mounted on a rotating disc assembly (filter wheel), forming a light beam chopper, and allowing sequential wavelength measurement of the measuring system and fluid sample within the measurement cell 3', under identical conditions. Such sequential measurements can be carried out at relatively high speed (e.g. 500 r.p.m.). It is also possible to apply a number of separate light sources, each having a different wavelength, rather than a filter wheel. The reference and sample fluids are controlled and fed through the measurement cell (3') (e.g. 0.6 mm wide) by e.g. electrically controlled valves, with fluid flowing continuously through the measurement cell to ensure temperature stability and representative water conditions.

The complete device (not shown in detail for reasons of clarity) comprises a detector assembly, light source, chopper/filter, test cell, water control valves, and infra-red detector/amplifier. The reference fluid stream is produced from the contaminated fluid by a suitable filter assembly, to produce a fluid stream free of dispersed oil and/or other contamination. Any filter suitable for the purpose can be applied, as will be appreciated by those skilled in the art. E.g. a filter having a pore size ≤ 0.001μm is applied in case of dissolved contaminants, whereas in case of other dispersed contaminants a filter having a pore size of 0.001-1μm is suitably applied.

Advantageously, in case of oil-in-water monitoring, both the concentration of the dissolved and of other dispersed hydrocarbon components, if any, can be determined by a sequence of two differential measurements, which differ only by the type of filter applied to create the reference water stream from the contaminated water stream. The concentration of dissolved contaminants can be determined by comparing the contaminated water stream with a dissolved component-free water stream, which is created by feeding the contaminated water through a suitable filter, e.g. pore size 0.001-1 μm. The said filter filters out all other dispersed components but does not filter out the dissolved components. Next, the concentration of dissolved components can be determined by comparing the said dispersed-free water stream with a water stream free from both dissolved and said other dispersed components, which is created by feeding the contaminated water through a suitable filter (pore size ≤ 0.001 μm). In the following the general differential method will be described.

The operation of the invention is as follows:

In case of oil-in-water-monitoring, the hydrocarbon concentration, as determined by the hydrocarbon-in-water monitor, is obtained after a sequence of data processing steps on the measured light intensities. This sequence uses values taken from two measuring steps. These basic measuring steps and the subsequent data processing will be described here.

In the first measuring step, during a number of rotations (e.g. 100) of the filter wheel light intensities $i_m$ are measured while sample water is flowing through the test cell. For each rotation of the filter wheel a measurement set $i_{m,\lambda}$ is measured, which consists of a number of measured light intensities at different wavelengths $\lambda$ (corresponding to the number of filters (e.g. 8) mounted in the filter wheel). In this example, in total, 100 measurements sets $i_{m,\lambda,n}$ with n = 1-100) are collected, giving 800 measurement values. The large amount of measurements taken allows statistical analysis to improve the accuracy of the instrument. From e.g. 100 measurement sets, e.g. the 10 measurement sets which have the largest deviation from the average light intensity, are rejected. Thus, 90 sample water measurement sets remain for further processing.

In the second measuring step, again during e.g. 100 rotations of the filter wheel, light intensities are measured, but now while reference water is flowing through the test cell. Again, after rejecting e.g. 10% of the measurements with largest deviation, this gives 90 reference water measurement sets. From these values, at each wavelength $\lambda$ the averaged light intensity is calculated, giving the reference light intensity $i_{x,\lambda}$ at 8 wavelengths.

Then, the normalized light intensity differences $d_{\lambda,n}$ are calculated for each of the 90 sample water measurement sets by subtracting and subsequently dividing by the reference light intensity at the corresponding wavelength, using

$$d_{\lambda,n} = \frac{i_{m,\lambda,n} - i_{x,\lambda}}{i_{x,\lambda}} \qquad (1)$$

Different effects are responsible for the measured light intensity differences. The ones considered here are the temperature difference between sample water and reference water, the oil concentration in the sample water and the particle concentration in the sample water. Now, from calibration experiments it is known how for these effects the normalized lights intensity at each wavelength changes proportional to other wavelengths. This proportionality for a certain effect k is termed a relative spectral response $y_{k,\lambda}$. Therefore, with the same measurement principle it is possible to address effects from a very different physical origin.

Next, in the data processing, for each measurement set of the wavelengths (e.g. 8) the normalized light intensity differences are fitted using three proportionality constants $P'_k$ to form a linear combination of the three relative spectral responses, given by

$$d_{\lambda,n} = \sum_{k=1}^{3} y_{k,\lambda} \cdot P'_{k,n} + r_{\lambda,n} \qquad (2)$$

The fitting is done such that the squares of the residual differences $r_\lambda$ between measured light intensities and the linear combination of relative spectral responses is minimized (least squares fitting). In this example, in total, 90 least square fits are performed giving 90 sets of 3 proportionality constants, which are indicative for the temperature difference, hydrocarbon concentration, and particle concentration.

To obtain absolute values $P_k$ for the temperature difference, hydrocarbon concentration, and particle concentration, the proportionality constants obtained from the fitting procedure are multiplied by calibration factors $C_k$, using

$$P_{k,n} = c_k \cdot P'_{k,n} \qquad (3)$$

These calibration factors are determined (e.g. experimentally, using a predetermined oil-in-water mixture, e.g. created by an accurate oil-injection). In this example, in total, 90 values for the temperature difference, oil concentration, and particle concentration are obtained. Finally, from these values the average oil and particle concentration together with their respective standard deviation are calculated.

It will be appreciated that the reference water conditioning system can be selected in such a manner that it is possible to measure and calculate the concentration of the dissolved and the dispersed components. This will entail two reference water systems and applying the above-mentioned calculation technique of the desired concentrations in order to detect the presence of these materials from the measured data.

It will be appreciated by those skilled in the art that any optical wavelength and any number of wavelengths suitable for the purpose can be applied in the said predetermined range of wavelengths.

Advantageously, the number of wavelengths applied is four to ten and in particular eight, e.g. 1.3, 1.43, 1.5, 1.6, 1.73, 2.16, 2.23 and 2.29 μm. It has appeared that advantageous effects of using such wavelengths are the following:

- $\lambda = 1.43$ μm, especially sensitive to temperature
- $\lambda = 1.30$ μm, $\lambda = 2.29$ μm, the combination of these wavelengths is especially sensitive to dispersed oil
- $\lambda = 2.23$ μm, especially sensitive to total dissolved hydrocarbons
- $\lambda = 2.16$ μm, especially sensitive to dissolved aliphatic hydrocarbons
- $\lambda = 2.29$ μm, especially sensitive to dissolved aromatic hydrocarbons.

Further, it will be appreciated that any number of rotations of the filter wheel and any suitable number of relative spectral responses can be applied. The measuring principle of the invention is capable of the detection of a large number of quality parameters of a discharge stream, such as salt concentration, alcohols and organic acids and similar contaminants.

Further, it will also be appreciated by those skilled in the art that the invention is not restricted to oil-in-water monitoring but can be applied for the measurement of a range of fluid based applications: e.g. dissolved hydrocarbons and other materials in water, fine dispersed materials in either aqueous or hydrocarbon streams, chemical quality analysis and the like.

Various modifications of the present invention will become apparent to those skilled in the art from the foregoing description. Such modifications are intended to fall within the scope of the appended claims.

**Claims**

1. A method for determining the concentration of a component present in a fluid stream in dispersed form comprising the steps of

   a) emitting a light beam in a predetermined range of wavelengths to a fluid sample to be analyzed, said sample flowing through a measurement cell;
   b) selecting a number of different wavelengths in said predetermined range;
   c) measuring a number of light intensities while sample fluid is flowing through the measurement cell and deriving therefrom a number of measurement sets which each consist of a number of measured light intensities at said different wavelengths;
   d) measuring a number of light intensities, while reference fluid is flowing through the measurement cell and deriving therefrom a number of reference fluid measurement sets;
   e) deriving from the data, thus obtained, information on the concentration of dispersed components in the fluid stream,

   characterized in that said reference fluid measurement sets each consist of a number of measured reference light intensities at said different wavelengths, and that step e) comprises calculating normalized light intensity differences for each of the sample fluid measurement sets by subtracting and subsequently dividing by the reference light intensity at the corresponding wavelength, and fitting the said normalized light intensity differences to form a linear combination of a determined number of relative spectral responses which take into account the manner in which the said normalized light intensity at each wavelength changes proportional to other wavelengths for certain effects responsible for the measured light intensity differences, in order to give sets of proportionality constants which are indicative for the relative spectral response in question; and multiplying said proportionality constants by calibration factors to obtain absolute values of the concentration of dispersed components in the fluid stream.

**2.** The method as claimed in claim 1, wherein from the values of the reference fluid measurement sets, at each wavelength the averaged light intensity is calculated, giving the reference light intensity at each of said wavelengths.

**3.** The method as claimed in claim 1 or 2, wherein the number of wavelengths is 4-10, and in particular 8.

**4.** The method as claimed in any one of claims 1-3, wherein at least 100 measurement sets are collected.

**5.** The method as claimed in any one of claims 1-4, wherein the fluid is water, and the said component is a contaminant such as oil and/or particles.

**6.** The method as claimed in any one of claims 1-5, wherein the relative spectral responses are temperature difference, oil concentration and particle concentration.

**7.** The method as claimed in any one of claims 1-6, wherein the said predetermined range of wavelengths is in the near-infra-red range, e.g. 1.0-2.5 $\mu$m.

**8.** The method as claimed in claim 7, wherein in step a) simultaneously visible light, e.g. 0.4-1 $\mu$m, is emitted, and in step b) at least one wavelength in said visible light range is selected.

**9.** An apparatus for determining the concentration of a component present in a fluid stream in dispersed form, comprising means for emitting a light beam in a predetermined range of wavelengths to a fluid sample to be analyzed, said sample flowing through a measurement cell; means for selecting a number of different wavelengths in said predetermined range; means for measuring a number of light intensities while sample fluid or reference fluid is flowing through the measurement cell and means for deriving from said number of light intensities a number of measurement sets which each consist of a number of measured light intensities at different wavelengths; and a number of reference liquid measurement sets, and means for deriving from the data, thus obtained, information on concentration of dispersed components in the fluid stream, characterized in that said reference liquid measurement sets each consist of a number of measured reference light intensities at said different wavelengths, and that means are present for calculating normalized light intensity differences for each of the sample fluid measurement sets by subtracting and subsequently dividing by the reference light intensity at the corresponding wavelength, and fitting the said normalized light intensity differences to form a linear combination of a determined number of relative spectral responses which take into account the manner in which the said normalized light intensity at each wavelength changes proportional to other wavelengths for certain effects responsible for the measured light intensity differences, in order to give sets of proportionality constants which are indicative for the relative spectral response in question; and multiplying said proportionality constants by calibration factors to obtain absolute values.

**10.** The apparatus as claimed in claim 9, wherein wavelength selection is achieved by narrow band interference filters, mounted on a rotating disc assembly, e.g. a filter wheel.

**11.** The apparatus as claimed in claim 9 or 10, wherein means are present for calculating at each wavelength the averaged light intensity from the values of the reference fluid measurement sets, giving the reference light intensity at each of said number of wavelengths.

**12.** The apparatus as claimed in any one of claims 9-11, wherein the said predetermined range of wavelengths is in the near-infra-red range, e.g. 1.0-2.5 $\mu$m.

**13.** The apparatus as claimed in claim 12, wherein means are present for emitting visible light, e.g. 0.4-1 $\mu$m, simultaneously with the said near-infra-red radiation, and means for selecting at least one wavelength in said visible light range.

**14.** The apparatus as claimed in any one of claims 9-13, wherein the fluid is water, and the component is a contaminant such as oil and/or particles.

**15.** The apparatus as claimed in claim 9 or 14, wherein the relative spectral responses are temperature difference, oil concentration and particle concentration.

**Patentansprüche**

1. Verfahren zum Bestimmen der Konzentration einer in einem Fluidstrom in dispergierter Form vorliegenden Komponente, mit den Schritten

   a) Aussenden eines Lichtstrahles in einem vorgegebenen Wellenlängenbereich auf eine zu analysierende Fluidprobe, welche Fluidprobe durch eine Meßzelle strömt;
   b) Auswählen einer Anzahl verschiedener Wellenlängen in dem vorgegebenen Bereich;
   c) Messen einer Anzahl von Lichtintensitäten, während das Probenfluid durch die Meßzelle strömt, und Ableiten einer Anzahl von Meßwertsätzen daraus, von denen jeder aus einer Anzahl gemessener Lichtintensitäten bei den genannten verschiedenen Wellenlängen besteht;
   d) Messen einer Anzahl von Lichtintensitäten, während ein Referenzfluid durch die Meßzelle strömt, und Ableiten einer Anzahl von Referenzfluid-Meßwertsätzen daraus;
   e) Ableiten aus den so erhaltenen Daten von Information über die Konzentration der dispergierten Komponenten im Fluidstrom,

   dadurch gekennzeichnet, daß die Referenzfluid-Meßwertsätze jeweils aus einer Anzahl von gemessenen Referenzlichtintensitäten bei den genannten verschiedenen Wellenlängen bestehen, und daß Schritt e) das Berechnen normalisierter Lichtintensitätsdifferenzen für jeden der Probenfluid-Meßwertsätze umfaßt, indem die Referenzlichtintensität bei der jeweiligen Wellenlänge subtrahiert und durch diese anschließend dividiert wird und die normalisierten Lichtintensitätsdifferenzen zur Bildung einer Linearkombination aus einer vorgegebenen Anzahl von relativen Spektralantworten eingepaßt werden, welche die Art und Weise in Berücksichtigung ziehen, auf welche sich die normalisierte Lichtintensität bei jeder Wellenlänge proportional zu den anderen Wellenlängen für bestimmte Effekte ändert, die für die gemessenen Lichtintensitätsdifferenzen verantwortlich sind, um Sätze von Proportionalitätskonstanten zu erzeugen, welche für die jeweils betrachtete Spektralantwort kennzeichnend sind; und indem die Proportionalitätskonstanten mit Kalibrierungsfaktoren multipliziert werden, um Absolutwerte der Konzentration der dispergierten Komponenten im Fluidstrom zu erhalten.

2. Verfahren nach Anspruch 1, bei welchem aus den Werten der Referenzfluid-Meßwertsätze bei jeder Wellenlänge die gemittelte Lichtintensität berechnet wird, was die Referenzlichtintensität bei jeder der genannten Wellenlängen ergibt.

3. Verfahren nach Anspruch 1 oder 2, bei welchem die Anzahl von Wellenlängen 4-10 und insbesondere 8 ist.

4. Verfahren nach einem der Ansprüche 1-3, bei welchem zumindest 100 Meßwertsätze gesammelt werden.

5. Verfahren nach einem der Ansprüche 1-4, bei welchem das Fluid Wasser ist und die genannte Komponente ein Verunreinigungsstoff wie Öl und/oder andere Partikel ist.

6. Verfahren nach einem der Ansprüche 1-5, bei welchem die relativen Spektralantworten die Temperaturdifferenz, die Ölkonzentration und die Partikelkonzentration sind.

7. Verfahren nach einem der Ansprüche 1-6, bei welchem der vorgegebene Bereich von Wellenlängen im nahen Infrarotbereich, z.B. 1,0-2,5 μm, ist.

8. Verfahren nach Anspruch 7, bei welchem im Schritt a) gleichzeitig sichtbares Licht, z.B. 0,4-1 μm, ausgesandt wird, und im Schritt b) zumindest eine Wellenlänge in dem genannten sichtbaren Lichtbereich ausgewählt wird.

9. Vorrichtung zur Bestimmung der Konzentration einer in einem Fluidstrom in dispergierter Form vorliegenden Komponente, mit Mitteln zum Aussenden eines Lichtstrahles in einem vorgegebenen Wellenlängenbereich zu der zu analysierenden Fluidprobe, wobei die Probe durch eine Meßzelle strömt; Mitteln zum Auswählen einer Anzahl unterschiedlicher Wellenlängen in dem genannten vorgegebenen Bereich; Mitteln zum Messen einer Anzahl von Lichtintensitäten, während die Probenflüssigkeit oder eine Referenzflüssigkeit durch die Meßzelle strömt, und Mitteln zum Ableiten einer Anzahl von Meßwertsätzen aus der genannten Anzahl von Lichtintensitäten, wobei jeder Meßwertsatz aus einer Anzahl von gemessenen Lichtintensitäten bei verschiedenen Wellenlängen besteht; und einer Anzahl von ReferenzflüssigkeitsMeßwertsätzen; und Mitteln zum Ableiten aus den so gewonnenen Daten von Information über die Konzentration der dispergierten Komponenten im Fluidstrom, dadurch gekennzeichnet, daß die Referenzflüssigkeits-Meßwertsätze jeweils aus einer Anzahl von gemessenen Referenzlichtintensitäten bei den genannten verschiedenen Wellenlängen bestehen; und daß Mittel zum Berechnen von normalisierten Lichtintensitätsdifferenzen für jeden der Probenfluid-Meßwertsätze vorhanden sind, indem sie die Referenzlichtintensität bei der jeweiligen Wellenlänge subtrahieren und anschließend durch diese hindurch dividieren, und zum Einpassen der genannten normalisierten Lichtintensitätsdifferenzen zur Bildung einer Linearkombination aus einer vorgegebenen Anzahl von relativen Spektralantworten, welche die Art und Weise in Berücksichtigung ziehen, auf die sich die genannte normalisierte Lichtintensität bei jeder Wellenlänge proportional zu anderen Wellenlängenfür bestimmte Effekte verändert, welche für die gemessenen Lichtintensitätsdifferenzen kennzeichnend sind, um Sätze von Proportionalitätskonstanten zu erhalten, die für die betrachtete relative Spektralantwort kennzeichnend sind; und zum Multiplizieren der Proportionalitätskonstanten mit Kalibrierungsfaktoren, um Absolutwerte zu erhalten.

10. Vorrichtung nach Anspruch 9, bei welcher die Wellenlängenauswahl mit Hilfe von Schmalbandinterferenzfiltern erzielt wird, die auf einer rotierenden Scheibenanordnung montiert sind, z.B. einem Filterrad.

11. Vorrichtung nach Anspruch 9 oder 10, bei welcher Mittel zum Berechnen der gemittelten Lichtintensität bei jeder Wellenlänge aus den Werten der Referenzfluid-Meßwertsätze vorhanden sind, was die Referenzlichtintensität bei jeder der genannten Anzahl von Wellenlängen ergibt.

12. Verfahren nach einem der Ansprüche 9-11, bei welchem der genannte vorgegebene Bereich von Wellenlängen im nahen Infrarotbereich, z.B. 1,0-2,5 µm, liegt.

13. Vorrichtung nach Anspruch 12, bei welcher Mittel zum Aussenden von sichtbarem Licht, z.B. 0,4-1 um, gleichzeitig mit der genannten nahen Infrarotstrahlung vorhanden sind, und Mittel zum Auswählen zumindest einer Wellenlänge in dem sichtbaren Lichtbereich.

14. Vorrichtung nach einem der Ansprüche 9-13, bei welcher das Fluid Wasser und die Komponente ein Verunreinigungsstoff wie Öl und/oder Partikel ist.

15. Vorrichtung nach Anspruch 9 oder 14, bei welcher die relativen Spektralantworten die Temperaturdifferenz, die Ölkonzentration und die Partikelkonzentration sind.

**Revendications**

1. Procédé pour déterminer la concentration d'un composant présent sous forme dispersée dans un courant liquide, comprenant les étapes consistant à

a) émettre un faisceau de lumière dans une plage de longueurs d'onde prédéterminée vers un échantillon de liquide à analyser, ledit échantillon s'écoulant à travers une cellule de mesure,
b) sélectionner un nombre de longueurs d'onde différentes dans ladite plage prédéterminée,
c) mesurer un nombre d'intensités de lumière, cependant que le liquide échantillon s'écoule à travers la cellule de mesure et en dériver un nombre de jeux de mesures, chacun constitué d'un nombre d'intensités de lumière mesurées auxdites différentes longueurs d'onde,
d) mesurer un nombre d'intensités de lumière, cependant que le liquide de référence s'écoule à travers la cellule de mesure et en dériver un nombre de jeux de mesures du liquide de référence,
e) dériver à partir des données, ainsi obtenues, l'information concernant la concentration de composants dispersés dans le courant liquide,

caractérisé en ce que chacun desdits jeux de mesures du liquide de référence est constitué d'un nombre d'intensités de lumière de référence mesurées auxdites différentes longueurs d'onde et en ce que l'étape e) comprend le calcul des différences d'intensités de lumière normalisées pour chacun des jeux de mesures du liquide échantillon par soustraction et division subséquentes par l'intensité de la lumière de référence à la longueur d'onde correspondante et l'utilisation desdites différences d'intensités de lumière normalisées, pour former une combinaison linéaire d'un nombre déterminé de réponses spectrales relatives, tenant compte de la manière conformément à laquelle ladite intensité de lumière normalisée à chaque longueur d'onde change proportionnellement aux autres longueurs d'onde, pour certains effets responsables des différences d'intensités de lumière mesurées, afin de donner des jeux de constantes de proportionnalité qui constituent une indication de la réponse spectrale relative en question et la multiplication desdites constantes de proportionnalité par des facteurs de calibrage, pour obtenir des valeurs absolues de la concentration en composants dispersés dans le courant liquide.

2. Procédé suivant la revendication 1, caractérisé en ce que, à partir des valeurs des jeux de mesure du liquide de référence, on calcule, à chaque longueur d'onde, l'intensité de lumière moyenne, donnant l'intensité de la lumière de référence, à chacune desdites longueurs d'onde.

3. Procédé suivant la revendication 1 ou 2, caractérisé en ce que le nombre de longueurs d'onde varie de 4 à 10 et est, plus particulièrement, de 8.

4. Procédé suivant l'une quelconque des revendications 1 à 3, caractérisé en ce que l'on recueille au moins 100 jeux de mesures.

5. Procédé suivant l'une quelconque des revendications 1 à 4, caractérisé en ce que le liquide est l'eau et ledit composant est une substance contaminante, comme de l'huile et/ou des particules.

6. Procédé suivant l'une quelconque des revendications 1 à 5, caractérisé en ce que les réponses spectrales relatives sont la différence de température, la concentration en huile et la concentration en particules.

7. Méthode suivant l'une quelconque des revendications 1 à 6, caractérisée en ce que ladite plage de longueurs d'onde prédéterminée se situe dans le domaine du proche infrarouge, par exemple, 1,0 à 2,5 µm.

8. Procédé suivant la revendication 7, caractérisé en ce que, au cours de l'étape a), on émet de la lumière simultanément visible, par exemple, de 0,4 à 1 µm et, au cours de l'étape b), on sélectionne au moins une longueur d'onde dans ladite plage de lumière visible.

9. Appareil pour déterminer la concentration d'un composant présent sous forme dispersée dans un courant liquide, qui comprend un moyen pour émettre un faisceau de lumière dans une plage de longueurs d'onde prédéterminée vers un échantillon de liquide à analyser, ledit échantillon s'écoulant à travers une cellule de mesure, un moyen pour sélectionner un nombre de longueurs d'onde différentes dans ladite plage prédéterminée, un moyen pour mesurer un nombre d'intensités de lumière, cependant que le liquide échantillon ou le liquide de référence coule à travers la cellule de mesure et un moyen pour dériver à partir dudit nombre d'intensités de lumière, un nombre de jeux de mesures, chacun de ces jeux étant constitué d'un nombre d'intensités de lumière mesurées aux différentes longueurs d'onde et un nombre de jeux de mesures du liquide de référence et un moyen pour dériver, à partir des données, ainsi obtenues, l'information relative à la concentration de composants dispersés dans le courant liquide, caractérisé en ce que chacun desdits jeux de mesures du liquide de référence est constitué d'un nombre d'intensités de lumière de référence mesurées auxdites différentes longueurs d'onde et en ce que des moyens sont présents pour calculer des différences d'intensités de lumière normalisées pour chacun des jeux de mesures du liquide échantillon par soustraction et division subséquentes par l'intensité de la lumière de référence à la longueur d'onde correspondante et l'utilisation desdites différences d'intensité de lumière normalisées, pour former une combinaison linéaire d'un nombre déterminé de réponses spectrales relatives prenant en compte la manière conformément à laquelle ladite intensité de lumière normalisée à chaque longueur d'onde change proportionnellement à d'autres longueurs d'onde pour certains effets responsables des différences d'intensités de lumière mesurées, afin d'obtenir des jeux de constantes de proportionnalité qui donnent l'indication de la réponse spectrale relative en question et la multiplication desdites constantes de proportionnalité par des facteurs de calibrage, pour obtenir des valeurs absolues.

10. Appareil suivant la revendication 9, caractérisé en ce que la sélection des longueurs d'onde est obtenue par des filtres d'interférence à bande étroite, montés sur un ensemble formant disque rotatif, par exemple, une roue filtrante.

11. Appareil suivant la revendication 9 ou 10, caractérisé en ce que des moyens sont présents pour calculer, à chaque longueur d'onde, l'intensité de lumière moyenne, à partir des valeurs des jeux de mesures du liquide de référence, donnant l'intensité de la lumière de référence à chacune des longueurs d'onde dudit nombre de longueurs d'onde.

12. Appareil suivant l'une quelconque des revendications 9 à 11, caractérisé en ce que ladite plage de longueurs d'onde prédéterminée se situe dans le domaine du proche infrarouge, par exemple 1,0 à 2,5 µm.

13. Appareil suivant la revendication 12, caractérisé en ce que des moyens sont présents pour émettre de la lumière visible, par exemple, de 0,4 à 1 µm, simultanément avec ledit rayonnement du proche infrarouge et des moyens sont présents pour sélectionner au moins une longueur d'onde dans ladite plage de lumière visible.

14. Appareil suivant l'une quelconque des revendications 9 à 13, caractérisé en ce que le liquide est l'eau et le composant est une substance contaminante, comme de l'huile et/ou des particules.

15. Appareil suivant la revendication 9 ou 14, caractérisé en ce que les réponses spectrales relatives sont la différence de température, la concentration en huile et la concentration en particules.

EP 0 716 741 B1

FIG.1

11

FIG.2